Europäisches Patentamt

European Patent Office

Office européen des brevets

(11) Veröffentlichungsnummer : **0 162 392**
**B1**

(12) **EUROPÄISCHE PATENTSCHRIFT**

(45) Veröffentlichungstag der Patentschrift :
11.11.87

(21) Anmeldenummer : 85105821.4

(22) Anmeldetag : 11.05.85

(51) Int. Cl.⁴ : **B 25 J 17/00,** B 25 J 11/00

(54) Kraftübertragungsvorrichtung für einen Industrieroboter.

(30) Priorität : 18.05.84 SE 8402692

(43) Veröffentlichungstag der Anmeldung :
27.11.85 Patentblatt 85/48

(45) Bekanntmachung des Hinweises auf die Patenterteilung : 11.11.87 Patentblatt 87/46

(84) Benannte Vertragsstaaten :
DE FR GB IT

(56) Entgegenhaltungen :
CH-A- 605 049
DE-A- 2 742 744
DE-A- 3 222 299
DE-A- 3 317 261

(73) Patentinhaber : ASEA AB

S-721 83 Västeras (SE)

(72) Erfinder : Forslund, Karl Erik
Bandverksgatan 93
S-72474 Västeras (SE)

(74) Vertreter : Boecker, Joachim, Dr.-Ing.
Rathenauplatz 2-8
D-6000 Frankfurt a.M. 1 (DE)

## Beschreibung

Die vorliegende Erfindung betrifft ein Kraftübertragungsvorrichtung für einen Industrieroboter gemäß dem Oberbegriff des Anspruches 1.

Bei der Kraftübertragung in einem Industrieroboter an dessen positionierbaren Teile werden immer höhere Anforderungen hinsichtlich der Spielfreiheit zwischen den kraftübertragenden Gliedern gestellt, um in bestimmten Fällen die höchst mögliche Positionierungsgenauigkeit zu erreichen. Ferner besteht der Wunsch, das notwendige Austauschen verschiedener Teile einfach und schnell durchführen zu können, um auftretende Totzeiten möglichst klein zu halten.

Ein übliches Kraftübertragungsmittel in Industrierobotern ist eine Spindel, vorzugsweise eine sogenannte Kugelspindel (ball screw), die von einem reversierbaren und programmierbaren elektrischen Motor angetrieben wird. Die Spindel ist mit einer Spindelmutter versehen, die mit einem anzutreibenden Glied verbunden ist, welches verschiedene Bewegungsformen ausführen kann in ein und derselben Ebene wie die Spindel. Bei einer bekannten Vorrichtung ist das angetriebene Teil ein drehbar gelagerter Rahmen, dessen eines Ende mit der Spindelmutter über zwei Verbindungsglieder verbunden ist, die mit ihrem einen Ende auf Drehzapfen an beiden Seiten der Spindelmutter und mit ihrem anderen Ende auf Drehzapfen an dem angetriebenen Glied aufgesetzt sind. Das Aufsetzen erfolgt dabei gewöhnlich mittels Kugellager. Wenn die Spindel in einer Richtung rotiert, so entsteht eine kleine scherenartige Bewegung in diesen Verbindungsgliedern, daß heißt ihre Achsen haben nicht mehr exakt die gleiche Winkelorientierung in ihren zueinander parallelen Ebenen. Wenn die Spindel in der entgegengesetzten Richtung rotiert, dann vertauschen die Verbindungsglieder ihre gegenseitige relative Lage, so daß sich ein kleiner Abweichungswinkel in der entgegengesetzten Richtung einstellt. Die Spindelmutter wird dabei um einen entsprechend kleinen Winkel in der einen oder anderen Richtung gedreht, daß heißt es ist ein gewisses Spiel vorhanden. Da die gegenseitigen Winkelbewegungen der Verbindungsglieder zu einem unerwünschten Spiel in der Kraftübertragungsvorrichtung führen, welches eine verminderte Positionierungsgenauigkeit zur Folge hat, ist es wichtig, dieses Spiel so klein wie möglich zu halten. Die naheliegenste Maßnahme, um dies zu erreichen, bestünde in der Verlängerung der Lager, da das Spiel verschwindet, wenn die Lager ausreichend lang sind. Solche langen Lager sind jedoch sehr raumaufwendig, da sie lange hervorragende Teile bilden, die freien Raum für ihre Bewegungen erfordern.

Eine andere bekannte Maßnahme besteht darin, die Spindelmutter längs einer Gleitschiene zu führen, deren Gleitbahn parallel zur Spindel verläuft, so daß die Spindelmutter sich nicht relativ zu der (ruhenden) Spindel drehen kann.

Der Erfindung liegt die Aufgabe zugrunde eine Kraftübertragungsvorrichtung der eingangs genannten Art zu entwickeln, bei welcher die Unterdrückung des vorgenannten Spiels mit sehr einfachen und wenig raumaufwendigen Mitteln erreicht wird.

Zur Lösung dieser Aufgabe wird eine Kraftübertragungsvorrichtung gemäß dem Oberbegriff des Anspruches 1 vorgeschlagen, welche erfindungsgemäß die im kennzeichnenden Teil des Anspruches 1 genannten Merkmale hat.

Eine vorteilhafte Ausgestaltung der Erfindung ist in dem weiteren Anspruch genannt.

Durch die feste und verdrehungssteife Verbindung zwischen den genannten Verbindungsgliedern wird bei der Erfindung das Spiel in der Kraftübertragungsvorrichtung in einer sehr einfachen Weise unterdrückt. Die Länge der Lager der Verbindungsglieder kann bei der Kraftübertragungsvorrichtung nach der Erfindung kurz gehalten werden, wodurch eine sehr kompakte Konstruktion möglich ist.

Anhand des in den Figuren gezeigten Ausführungsbeispiels soll die Erfindung näher erläutert werden. Es zeigen

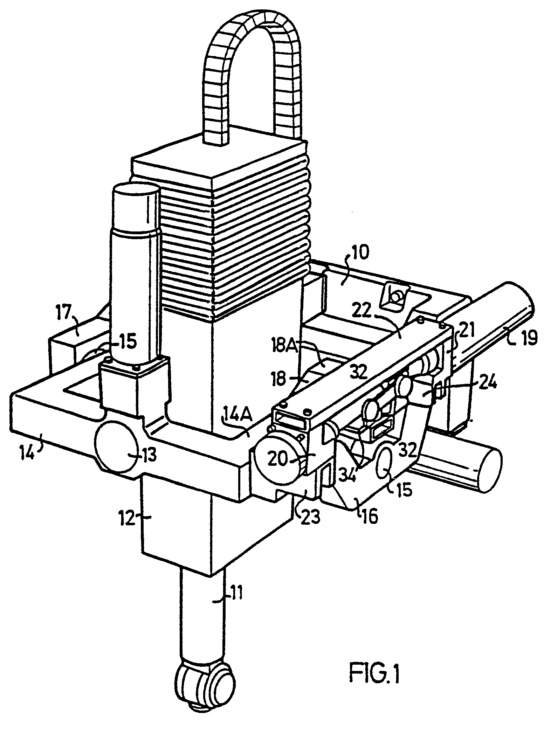

Figur 1 schematisch eine perspektivische Darstellung eines Industrieroboters mit einer Kraftübertragungsvorrichtung nach der Erfindung,

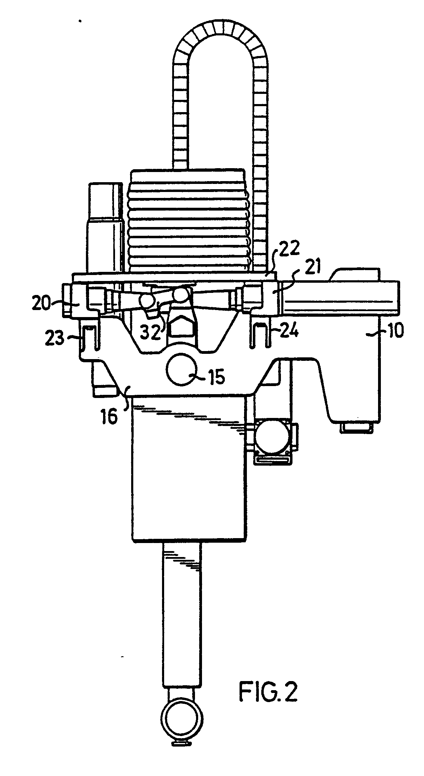

Figur 2 eine Seitenansicht des Industrieroboters in Figur 1,

Figur 3 eine Seitenansicht der als separate Einheit in dem Industrieroboter ausgebildeten Kraftübertragungsvorrichtung gemäß der Erfindung,

Figur 4 einen Schnitt längs der Linie 4-4 in Figur 3,

Figur 5 eine Draufsicht auf die Kraftübertragungsvorrichtung in Figur 3, teilweise im Schnitt.

Der Roboter hat eine Befestigungsvorrichtung 10 zu seiner Befestigung an einer Säule oder dergleichen. Seine freier Arbeitsarm 11 ist innerhalb eines Gehäuses 12 befestigt, welches mittels Achszapfen 13 drehbar in einem Rahmen 14 gelagert ist, der seinerseits mittels Achszapfen 15 zwischen zwei Winkelarmem 16, 17 gelagert ist, die zu der Befestigungsvorrichtung 10 gehören.

Am Rahmen 14 befindet sich ein Arm 18, der sich von einem Seitenholm 14A des Rahmens aus nach oben und schräg zu dem Seitenholm in den Raum oberhalb des Winkelarms 16 erstreckt, wobei sein oberes Ende einen Betätigungsarm 18A bildet, der radial gegenüber dem Achszapfen 15 versetzt ist, so daß der Rahmen 14 mittels dieses Betätigungsarmes 18A gedreht werden kann. Der Betätigungsarm 18A wird durch einen elektrischen Reversiermotor 19 über eine Kraftübertragungsvorrichtung gemäß der Erfindung betätigt.

Zwei Lagerblöcke 20, 21 werden mittels eines Stabes 22 oder einem ähnlichen Bauteils zu einer Einheit verbunden und sind lösbar an zwei Winkeln 23, 24 befestigt, die von dem Winkelarm 16 ausgehen.

Der Motor treibt eine Spindel 25, welche in den Lagerblöcken gelagert ist. Auf der Spindel befindet sich ein Spindelmutter 26. Die Spindel ist zweckmäßigerweise eine bekannte sogenannte Kugelspindel (ball screw) mit einer entsprechenden Spindelmutter, um die Reibung und das Spiel so klein wie möglich zu halten. Die Spindel ist zum Schutz mit einem Balgen 25A oder dergleichen umgeben.

An der Spindelmutter 26 sind zwei Arme 27, 28 vorhanden. An den Enden dieser Arme sind Achsbolzen 30 vorhanden, mit deren Hilfe die Enden der Arme 27, 28 über Kugellager 33 mit Verbindungsgliedern 31, 32 verbunden sind. Die Verbindungsglieder sind durch ein verdrehungssteifes Querglied 34 fest miteinander verbunden und bilden so eine starre Einheit.

Die entgegengesetzten Enden der Verbindungsglieder 31, 32 sind mit Hilfe von Achzapfen 35 und Kugellagern mit zwei Winkelarmen 36 und 37 verbunden. Diese Winkelarme 36, 37 werden von einem hohlen Querglied 38 getragen, dessen eines Ende durch eine Wand 39 geschlossen ist, in welcher Löcher vorhanden sind für Schrauben zur Befestigung der Wand an dem Ende des Betätigungsarm 18A des Rahmens 14.

Der Betätigungsarm 18A vollführt ein bogenförmige Bewegung um die Aches des Achbolzens 15. Die Verbindungsglieder 31, 32 passen sich dieser Bewegung an, wenn die Spindelmutter 26 in der einen oder anderen Richtung auf der Spindel 25 bewegt wird.

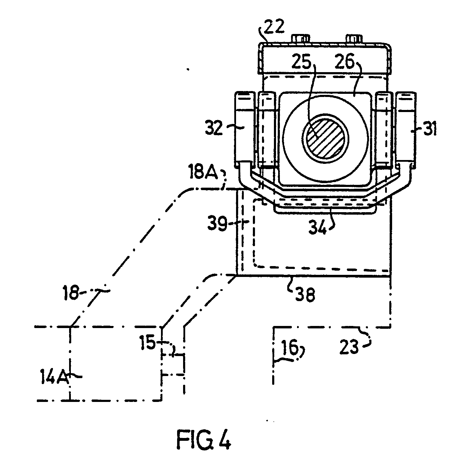

Dadurch, daß die Verbindungsglieder 31, 32 miteinander starr zu einer Einheit verbunden sind, werden relative Winkelbewegungen zwischen ihnen verhindert. Dies hat zur Folge, daß die Spindelmutter daran gehindert wird, sich relativ zur (stillstehenden) Spindel zu drehen. Die Länge der Lager kann daher klein gehalten werden, was den Figuren 4 und 5 entnommen werden kann, in denen die Länge der Lager gleich der Breite der Kugellager ist.

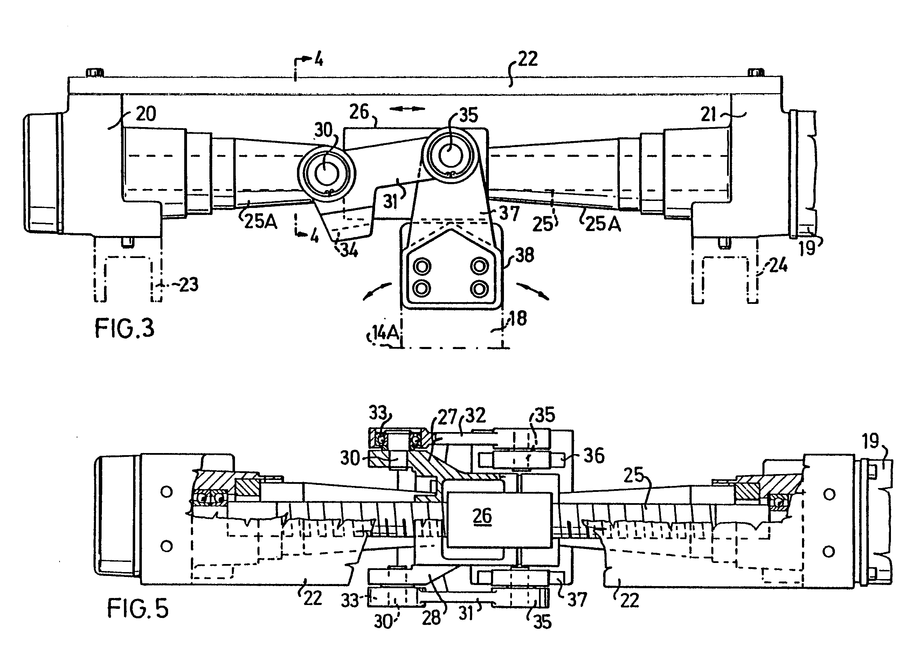

Vom Standpunkt der Bedienungsfreundlichkeit ist es ein besonderer Vorteil, daß die in den Figuren 3 bis 5 gezeigte Vorrichtung eine selbständige Einheit bildet, die leicht vom Roboter zum Zwecke des Austausches abgenommen werden kann, sodaß ein schneller Austausch möglich ist und kurze Totzeiten erreicht werden.

Die schmalen Lager, also die Kugellager 33 in den Verbindungsgliedern 31, 32, ermöglichen einen äußerst kompakten Aufbau der genannten Einheit bei gleichzeitiger Erfüllung hoher Anforderungen hinsichtlich der Spielfreiheit der Kraftübertragung.

Die Vorrichtung nach der Erfindung ist besonders geeignet für hängende Roboter der in den Figuren gezeigten Art.

## Patentansprüche

1. Kraftübertragungsvorrichtung für Industrieroboter, insbesondere Pendelroboter, mit einer Spindelmutter, die auf einer drehbar montierten Antriebsspindel angeordnet ist, wobei die Spindel von einem Umkehrantrieb antreibbar ist, um die Spindelmutter längs der Spindel in eine gewünschte Position in einer vorbestimmten Ebene zu fahren, und mit einem von der Spindelmutter angetriebenen Glied, welches auf einer vorbestimmten Bahn in der genannten Ebene bewegbar ist und mit der Spindelmutter über ein Paar paralleler Verbindungsglieder (31, 32) verbunden ist, die über Lager mit je einem ihrer Enden auf je einer Seite der Spindelmutter und des Antriebsgliedes drehbar mit der Spindelmutter verbunden sind, dadurch gekennzeichnet, daß die Verbindumgsglieder (31, 32) mittels eines verdrehungssteifen Gliedes (34) fest miteinander verbunden sind.

2. Vorrichtung nach Anspruch 1, dadurch gekennzeichnet, daß die Antriebsspindel (25) an ihren Enden in Lagerblöcken (20, 21) gelagert ist, die derart mittels eines Gliedes (22) miteinander verbunden sind, daß sie eine Einheit bilden, die lösbar an einer Winkelvorrichtung oder einem Rahmen befestigbar ist.

## Claims

1. Power transmission device for industrial robots, particularly pendulum robots, with a nut means which is mounted on a rotatably mounted drive screw, rotatable with the aid of a reversible drive means for moving the nut means along the drive screw to a desired position in a predetermined plane, and with a member driven by the nut means, movable along a predetermined path in said plane and connected to the nut means with the aid of a pair of parallel link members (31, 32), which are mounted via bearings at their respective ends to journalling pins on either side of the nut means and the drive member, respectively, characterized in that the link members (31, 32) are rigidly connected to each other with the aid of a torsionally stiff member (34).

2. Device according to Claim 1, characterized in that the drive screw (25) is mounted at its ends in bearing blocks (20, 21), which are mutually connected via a member (22) to form a unit which is removably attachable to bracket means or a frame.

## Revendications

1. Dispositif de transmission de force pour un robot industriel, notamment un robot pendulaire, comportant un écrou de broche, qui est disposé sur une broche d'entraînement montée de manière à pouvoir tourner et qui peut être entraînée par un dispositif d'entraînement réversible afin de déplacer l'écrou le long de la broche pour l'amener dans une position désirée dans un plan prédéterminé, et comportant un organe qui est entraîné par l'écrou de broche, peut être déplacé sur une trajectoire prédéterminée dans ledit plan et est relié à l'écrou de broche par l'intermédiaire d'un couple d'organes parallèles de liaison (31, 32), qui sont reliés, de manière à pouvoir tourner, par une de leurs extrémités de chaque côté de l'écrou de broche et de l'organe d'entraînement, par l'intermédiaire de paliers, à l'écrou de broche, caractérisé par le fait que les organes de liaison (31, 32) sont reliés rigidement entre eux au moyen d'un organe rigide en torsion (34).

2. Dispositif suivant la revendication 1, caractérisé par le fait que la broche d'entraînement (25), est tourillonnée, au niveau de ses extrémités, dans des blocs de paliers (20, 21), qui sont reliés entre eux au moyen d'un organe (22) de telle sorte qu'ils forment une unité qui peut être fixée de façon détachable à un dispositif en forme de cornière ou à un cadre.

FIG.1

FIG.2

FIG.3

FIG.5

FIG 4